# DEMANDE DE BREVET EUROPEEN

(11) **EP 1 681 646 A1**
(43) Date de publication de la demande: **19.07.2006**
(21) Numéro de dépôt: 06290021.2
(22) Date de dépôt: 05.01.2006
(51) Int. Cl.: G06F 17/30

(54) **Procédé de navigation automatique en mode interposition**

(30) Priorité: 14.01.2005 FR 0500427
(71) Demandeur: FRANCE TELECOM, 75015 Paris (FR)
(72) Inventeur: Brault, Sébastien, 14000 Caen (FR); Bailleux, Benoit, 14123 Cormelles Le Royal (FR); Laforge, Jérome, 14370 Argences (FR)
(74) Mandataire: Habasque, Etienne J. Jean-François

(57) **Abrégé**

La présente invention concerne un procédé de navigation automatique à partir d'un navigateur Web (2) sur une pluralité de pages Web contenues sur des serveurs (3) tel que tous les flux d'informations entre le navigateur (2) et les serveurs (3) des pages Web transitent par un serveur d'interposition (1), comportant les étapes de :
- création (31) et stockage (32) d'au moins un scénario de navigation automatique comportant une adresse de page Web de déclenchement du scénario et au moins une adresse de page Web de redirection,
- sélection (36) du scénario de navigation automatique comportant l'adresse de déclenchement correspondant à l'adresse d'une requête, émise par le navigateur Web,
- interception (40) de la réponse du serveur d'hébergement à la requête d'accès par le serveur d'interposition,
- modification (41) de la réponse en une réponse de redirection incluant l'adresse de redirection définie dans le scénario,
- génération (44) d'une requête d'accès par le navigateur vers la page Web de redirection.

## Description

La présente invention concerne un procédé de navigation automatique à partir d'un navigateur Web sur une pluralité de pages Web contenues sur des serveurs tel que tous les flux d'informations entre le navigateur et les serveurs des pages Web transitent par un serveur d'interposition. Elle concerne également un serveur et un produit logiciel.

Avec le développement des technologies liées au réseau Internet, de nombreuses applications informatiques d'entreprise sont portées, ou interfacées, sur le réseau internet interne, ou intranet, de l'entreprise. L'utilisation de telles applications s'effectue par navigation de page en page avec l'aide d'un navigateur Web tel que Internet Explorer de la société Microsoft Inc., ou autres.

Dans le cadre de son métier, l'utilisateur peut ainsi être amené à naviguer à travers plusieurs applications complexes. Sur chacune des applications, l'utilisateur doit souvent appeler plusieurs pages avant d'atteindre l'information qui l'intéresse. Si le processus doit être répété plusieurs dizaines de fois par jour, cette navigation de page en page peut générer des pertes de temps importantes. De même, dans une navigation complexe réalisée rarement et donc mal connue de l'utilisateur, celui-ci peut faire des erreurs ou se perdre dans l'application, nécessitant, là encore, des modes de correction ou de recherche générateurs de perte de temps.

Le but de l'invention est donc d'offrir à l'utilisateur une navigation aisée et fiable à travers des applications complexes permettant ainsi une meilleure productivité de celui-ci.

L'objet de l'invention est donc un procédé de navigation automatique à partir d'un navigateur Web sur une pluralité de pages Web contenues sur des serveurs tel que tous les flux d'informations entre le navigateur et les serveurs des pages Web transitent par un serveur d'interposition, caractérisé en ce qu'il comporte les étapes de :
a. création d'au moins un scénario de navigation automatique comportant une adresse de page Web de déclenchement du scénario et au moins une adresse de page Web de redirection,
b. stockage du ou des scénarios créés dans le serveur d'interposition,
c. génération par le navigateur Web d'une requête d'accès à la page Web située à l'adresse de déclenchement d'un scénario,
d. interception de la requête d'accès par le serveur d'interposition,
e. sélection du scénario de navigation automatique comportant l'adresse de déclenchement correspondant à l'adresse de la requête, et en parallèle,
f. transmission de la requête d'accès au serveur hébergeant la page Web demandée, puis
g. interception de la réponse du serveur d'hébergement à la requête d'accès par le serveur d'interposition,
h. modification de la réponse en une réponse de redirection incluant l'adresse de redirection définie dans le scénario,
i. transmission de la réponse modifiée au navigateur,
j. génération d'une requête d'accès par le navigateur vers la page Web de redirection.

D'autres caractéristiques de l'invention sont :
- les étapes d à j sont répétées pour chaque nouvelle adresse de redirection incluse dans le scénario ;
- plusieurs scénarios sont attachés à une adresse de déclenchement, et le choix du scénario dépend de valeurs de paramètres de session ;
- le scénario comporte des conditions d'arrêt du scénario et/ou des conditions d'extraction de données de la réponse, lesdites conditions étant liées aux réponses ; et
- le scénario est apte à recevoir des valeurs de paramètres en entrée, ces valeurs étant utilisées dans l'interprétation du scénario.

Un autre objet de l'invention est un serveur d'interposition comportant des premiers moyens de communication avec un navigateur Web et des seconds moyens de communication avec des serveurs de pages Web tel que tous les flux d'informations entre le navigateur et les serveurs de pages Web transitent par le serveur d'interposition, comportant :
- des moyens de stockage d'au moins un scénario de navigation automatique comportant une adresse de page Web de déclenchement du scénario et au moins une adresse de redirection,
- des premiers moyens d'interception de toute requête d'accès du navigateur Web vers un serveur de pages Web,
- des moyens de sélection des scénarios de navigation comportant l'adresse de déclenchement correspondant à l'adresse de la requête,
- des seconds moyens d'interception de la réponse du serveur de pages Web à la requête d'accès,
- des moyens de modification de la réponse en une réponse de redirection incluant l'adresse de redirection définie dans le scénario sélectionné, et
- des moyens de transmission de la réponse modifiée au navigateur.

Un autre objet de l'invention est un support de mémorisation comportant des instructions de programme adaptées à la mise en oeuvre du procédé de navigation automatique lorsque ledit programme est exécuté sur un ordinateur.

L'invention sera mieux comprise à la lecture de la description qui va suivre, donnée uniquement à titre d'exemple, et faite en référence aux dessins en annexe dans lesquels :
- la figure 1 est une vue schématique d'un réseau internet possédant un serveur d'interposition ;
- la figure 2 est une vue schématique du flux entre un navigateur et un serveur Web à travers un serveur d'interposition ;
- la figure 3 est un ordinogramme d'un mode de réalisation de l'invention; et
- la figure 4 est une vue schématique d'un serveur d'interposition.

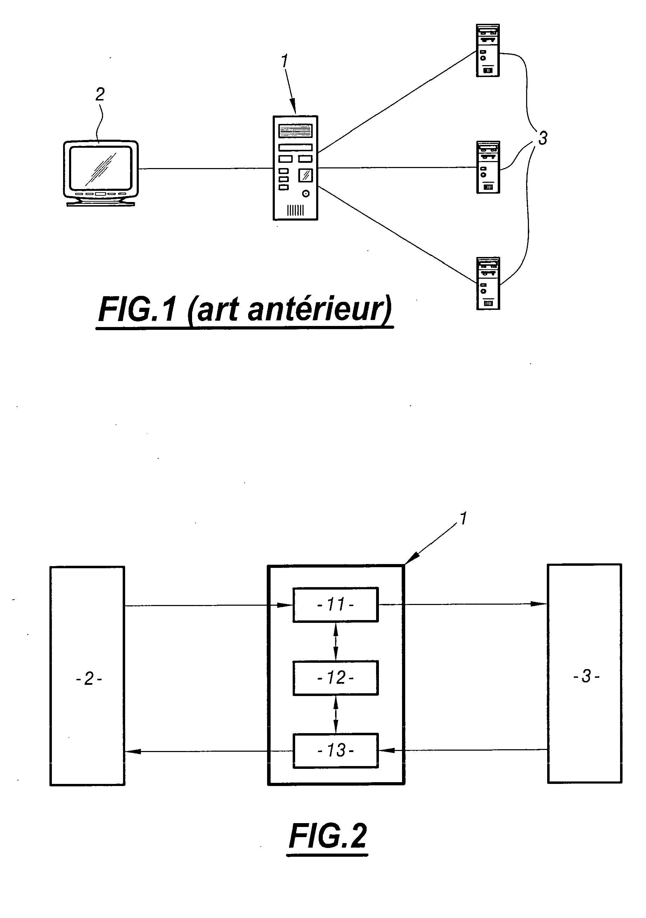

En référence à la figure 1, un réseau comporte un serveur d'interposition 1 entre un navigateur Web 2 et des serveurs de pages Web 3.

Un serveur d'interposition est un serveur par lequel transitent tous les flux d'informations entre le ou les navigateurs et les serveurs Web.

Il existe de nombreuses sortes de serveurs d'interposition qui se différencient par leur fonctionnalité. Par exemple, un pare-feu est une unité qui s'interpose sur tout le trafic passant entre deux réseaux et protège l'un d'eux, ou une partie de l'un d'eux, contre tout accès non autorisé. Le réseau protégé est souvent un réseau local que le pare-feu protège du réseau public internet. Une station de travail située sur le réseau local et voulant accéder au serveur Web du réseau public a toutes ses communications filtrées par le pare-feu.

Un autre exemple de serveur d'interposition particulièrement pertinent pour cette description, concerne des serveurs d'interposition à mémoire d'état dont un exemple est décrit dans la demande de brevet WO 01/11821 déposée le 7 août 2000. Ce type de serveur d'interposition permet de créer une session de navigation et donc, potentiellement, d'enclencher des actions en fonction de l'historique de navigation. Chaque session comporte des paramètres qui lui sont propres comme, par exemple, la valeur de témoins (« cookie » en anglais).

Un tel serveur d'interposition, figure 2, comporte un filtre 11 des requêtes provenant du navigateur Web 2 à destination des serveurs Web 3. Ce filtre 11 est connecté à des moyens 12 de traitement de ces requêtes. De même, les pages Web envoyées en retour par le serveur Web 3 transitent par un second filtre 13 connecté également aux moyens 12 de traitement, avant d'être dirigées vers le navigateur Web 2.

L'utilisation de témoins permet au serveur d'interposition de relier chaque requête aux requêtes précédentes provenant du même navigateur et/ou du même utilisateur, créant ainsi une session de navigation pour ce navigateur.

Les requêtes et les réponses qui transitent par le serveur d'interposition respectent le protocole HTTP 1.1 décrit dans la RFC 2616 et disponible à l'adresse http://www.ietf.org/rfc/rfc2616.txt.

Dans ce protocole, des codes de retour sont envoyés par le serveur Web 3 au navigateur 2 pour l'informer des résultats de sa requête. Plus particulièrement, le serveur Web 3 utilise des codes de retour de type 200 pour indiquer que l'exécution de la requête s'est effectuée correctement et des codes de retour de type 300 pour indiquer une redirection, c'est-à-dire que le serveur Web 3 demande au navigateur 2 de se rediriger vers une autre adresse fournie par ce serveur. Cela a pour effet que le navigateur effectue une nouvelle requête vers cette adresse sans que l'utilisateur n'ait aucune action particulière à effectuer.

Les différents codes de retour de type 200 ou 300 sont décrits aux chapitres 10.2 et 10.3 de la RFC HTTP 1.1.

Ce serveur d'interposition 1 est donc utilisé comme support du procédé de navigation automatique qui va maintenant être décrit.

Préalablement à la navigation automatique proprement dite, des scénarios de navigation sont créés puis stockés sur le serveur d'interposition.

Ces scénarios définissent des adresses de pages Web de déclenchement ainsi que des adresses de pages Web de redirection.

Dans un mode de réalisation préféré, les scénarios sont stockés dans des fichiers de données dont le format est conforme au standard XML (Extensible Markup Language - langage de balisage extensible). De même, la liste des adresses de déclenchement et des scénarios associés est stockée dans un fichier XML, tel que, par exemple :

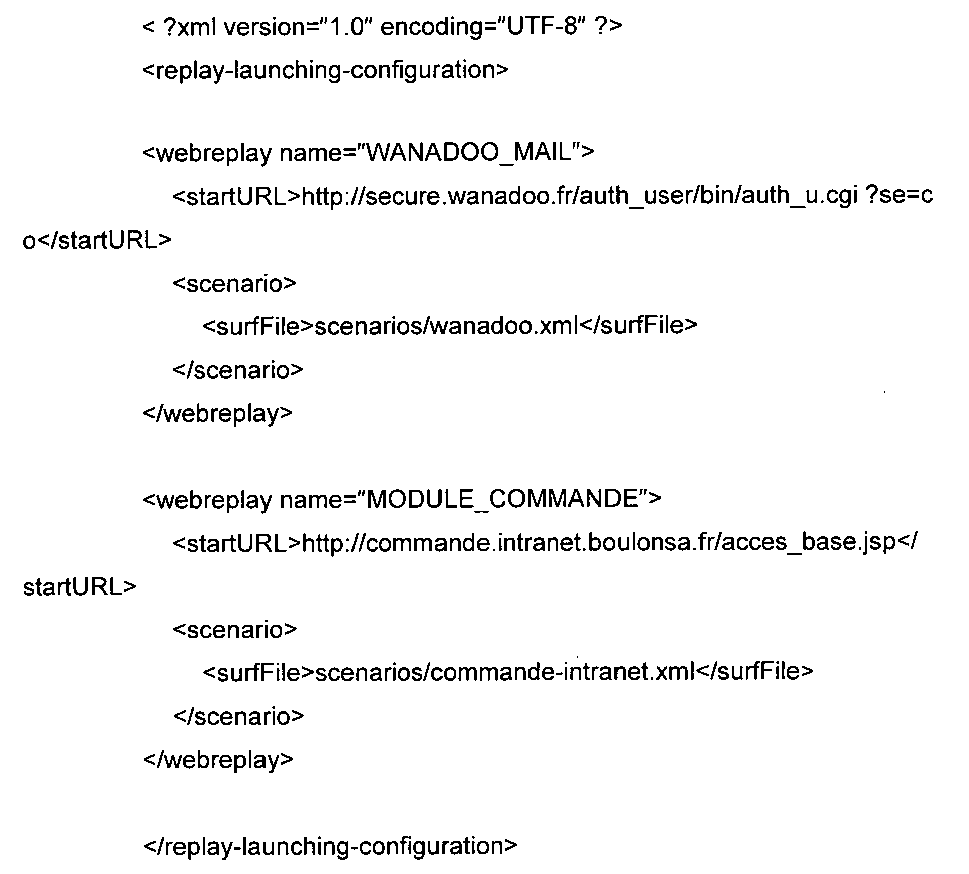

Ainsi, chaque scenario est écrit dans un fichier dont le nom est défini par la balise <surfFile> et est déclenché par l'adresse décrite par la balise <startURL>. L'ensemble est parenthésé et nommé par une balise <webreplay>.

Un fichier de scénario défini par la balise <surfFile> est par exemple :

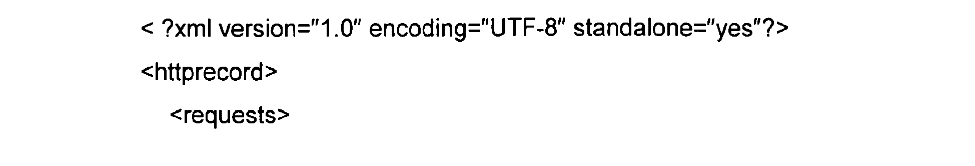

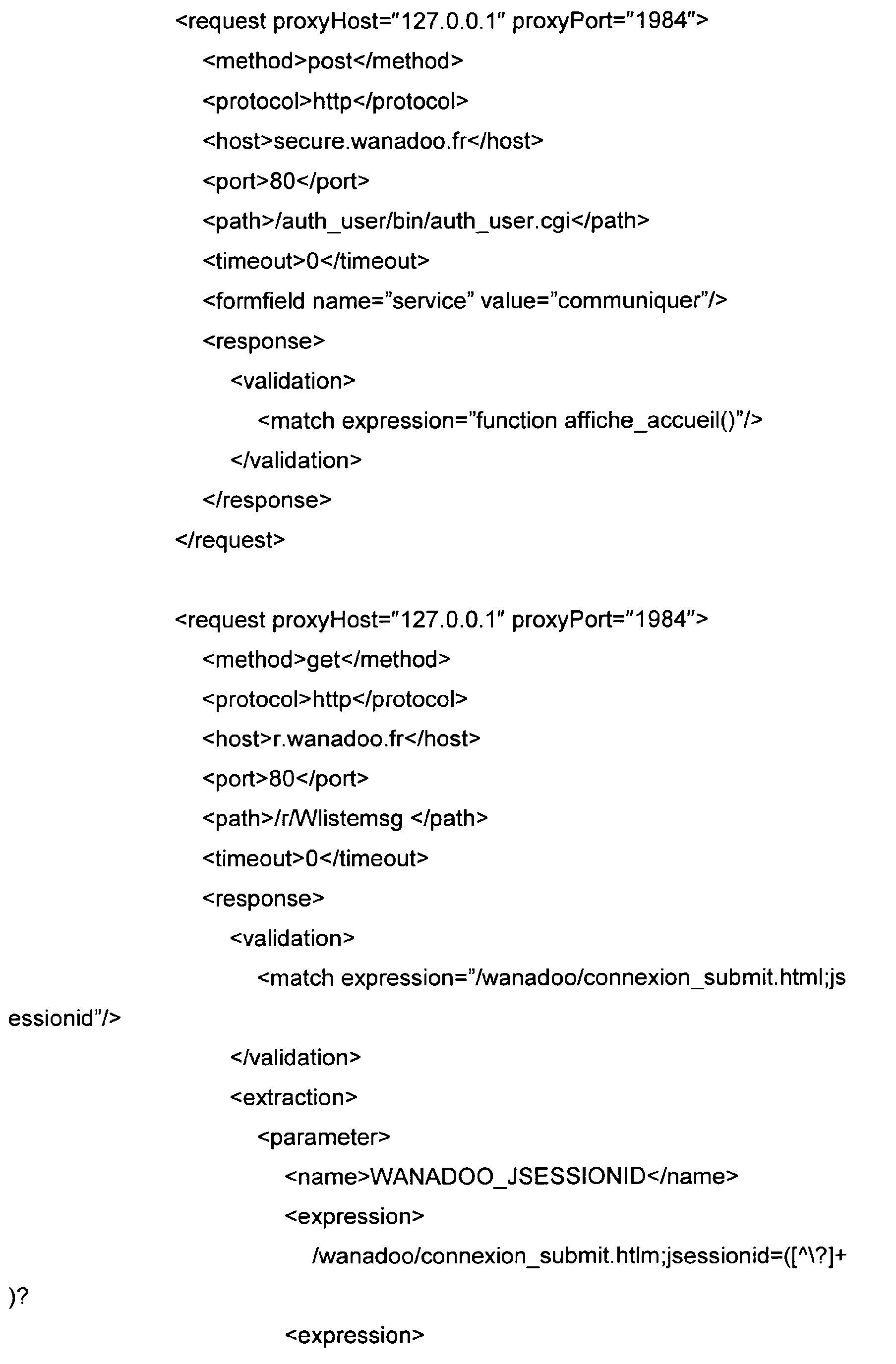

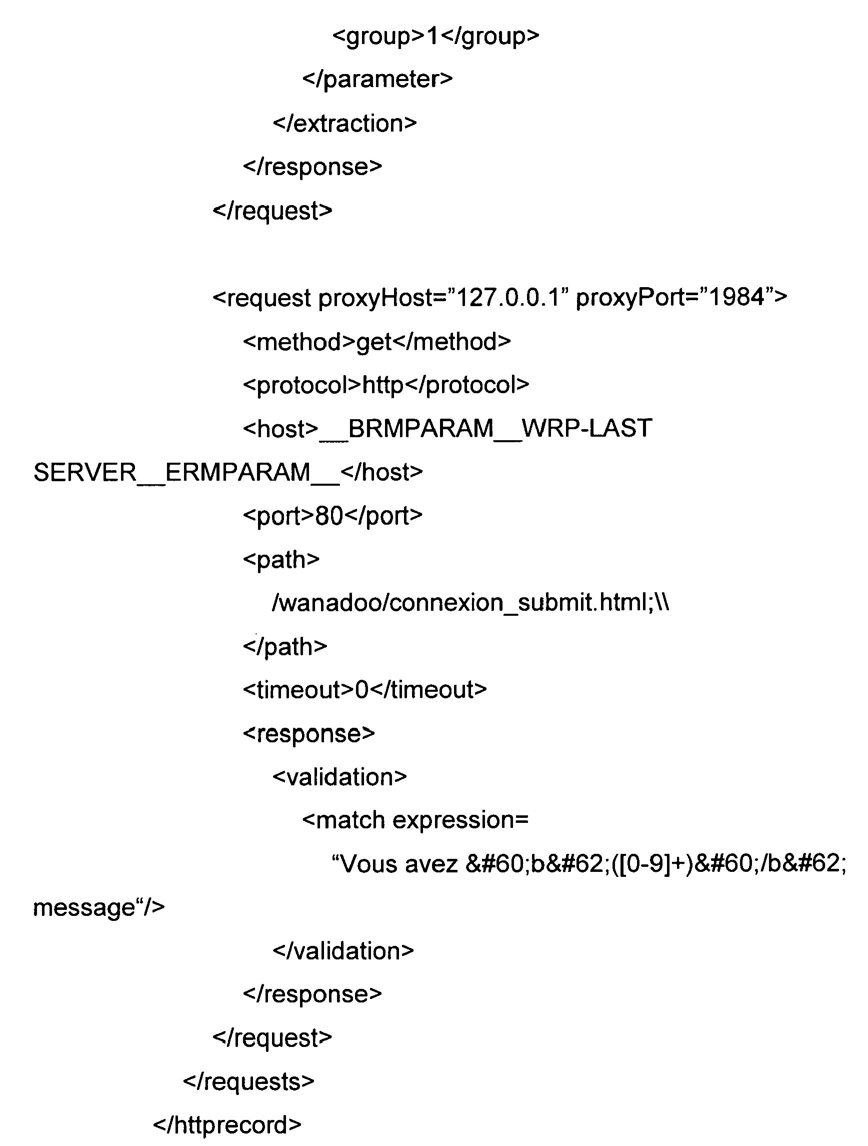

Dans cet exemple de scénario, écrit en langage XML, l'ensemble des adresses de redirection est regroupé par une balise <requests>. A l'intérieur de celle-ci, la lecture se fait séquentiellement. Chaque adresse de redirection est définie par une balise <request> qui comprend deux grandes parties. La première partie, qui démarre généralement avec la balise <method> et se termine avec le début de la balise <response> définit tous les champs nécessaires pour former correctement l'adresse de redirection. La seconde partie est parenthésée par la balise <response> et définit les actions que doit faire le serveur d'interposition quand la réponse correspondant à la requête précédente lui parvient en provenance du serveur Web 3. Typiquement, ces actions sont de deux ordres. Premièrement, les actions de validation définies par la balise <validation> qui correspondent à la vérification que certains champs de caractères se trouvent effectivement dans la réponse. Comme illustré avec la troisième requête de l'exemple, les actions de validation utilisent la technologie des « expressions rationnelles » (de l'anglais « regular expression ») bien connues de l'homme du métier pour définir des modèles de chaînes de caractères. Le second type d'action en réponse concerne des extractions de paramètres, définis par la balise <extraction>.

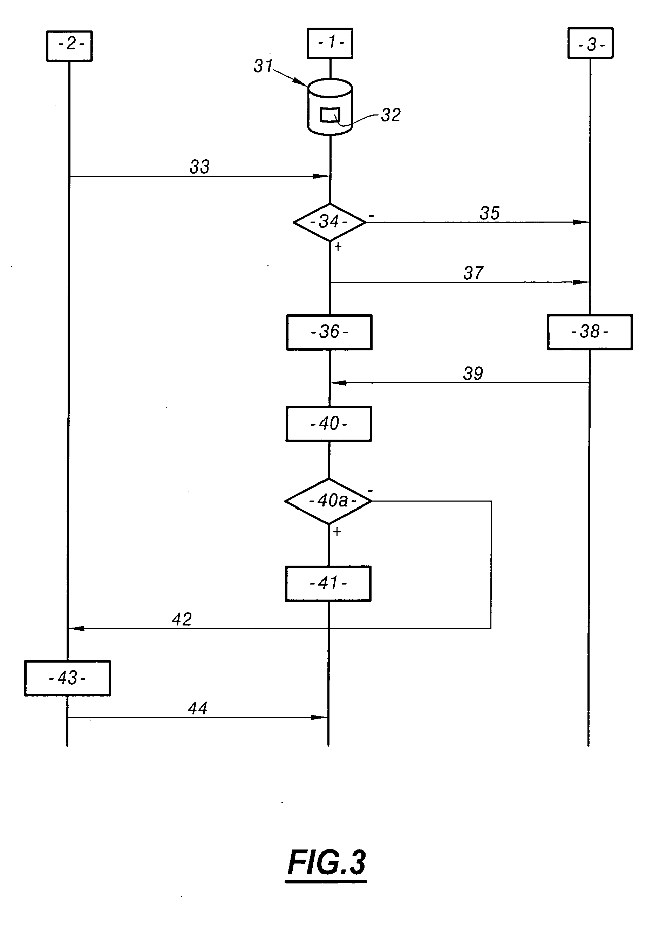

En référence à la figure 3, les scénarios sont donc créés en 31 puis stockés en 32 sur le serveur d'interposition 1. On remarquera que la création peut avoir lieu sur une station de travail quelconque. Dans ce cas, le fichier de scénario est transféré sur le serveur d'interposition 1 avant d'y être stocké.

Le navigateur Web 2 émet une requête en 33 en direction d'une page d'un serveur Web 3.

En 34, le serveur d'interposition 1 intercepte cette requête et compare l'adresse de la page Web avec les adresses contenues dans la liste des adresses de déclenchement.

Si cette adresse n'est pas une adresse de déclenchement, alors la requête est envoyée en 35 au serveur concerné sans autre traitement.

Par contre, si c'est une adresse de déclenchement, alors le scénario correspondant est sélectionné en 36, et, en parallèle, la requête est envoyée au serveur Web en 37.

Le serveur Web traite la requête en 38 et envoie une réponse en 39 au navigateur.

Cette réponse est interceptée en 40 par le serveur d'interposition.

Celui-ci vérifie en 40a que cette réponse correspond à la réponse attendue par le scénario en utilisant les actions de validation de la balise <validation>.

Si la réponse n'est pas la réponse attendue, alors celle-ci est transférée au navigateur 2 sans autre traitement.

Si la réponse est celle attendue, et en utilisant les champs d'adresses décrits dans le scénario sélectionné, le serveur modifie en 41 la réponse pour la transformer en une réponse de redirection incluant l'adresse de redirection extraite du scénario, c'est-à-dire que la réponse est modifiée pour inclure un code de réponse de type 300.

Plus particulièrement, le code de réponse utilisé, est un des codes 301, 302, 303 ou 307. De façon préférentielle, le code 302 est utilisé.

Cette réponse modifiée est envoyée en 42 au navigateur qui génère alors automatiquement en 43 une nouvelle requête avec l'adresse de redirection. Celle-ci est envoyée en 44 au serveur d'interposition et le cycle continue jusqu'à épuisement du scénario, c'est-à-dire jusqu'à l'exécution de la dernière requête de redirection contenue dans le fichier du scénario.

Ainsi, en répétant les étapes 34 à 44 au fur et à mesure de la lecture du fichier de scénario, on construit avantageusement une navigation complexe automatisée.

De par le mode de fonctionnement du serveur d'interposition décrit précédemment en liaison avec la description d'un scénario, on constate que le serveur d'interposition peut extraire des valeurs des pages Web envoyées en réponse (balise <extraction> des fichiers de description des scénarios). Ces valeurs étant assimilées à des paramètres, on conçoit aisément, que ceux-ci peuvent être utilisés pour compléter, par exemple, des adresses de redirection subséquentes présentes dans le scénario. Ainsi les paramètres en majuscule de l'exemple de scénario présenté ci-dessus représentent des paramètres dont la valeur a été extraite lors d'une étape précédente par l'intermédiaire des balises <extraction>.

Dans l'exemple de fichier de scénario présenté ci-dessus, on constate également que, pour une page de redirection donnée, il peut exister une balise <validation>. Celle-ci définit une condition, en général sous forme d'une expression rationnelle, que doit remplir la page retournée par le serveur Web 3. Cela permet de définir des points d'arrêt du scénario si, par exemple, le serveur retourne une page d'erreur au lieu de la page Web demandée.

L'extraction de données, comme la validation de pages, permettent avantageusement un contrôle très précis du déroulement du scénario et son adaptation à des conditions évolutives.

En définissant ainsi un scénario de navigation automatique on permet à l'utilisateur d'acquérir une plus grande efficacité dans le traitement de processus complexes. Et ceci, sans modification des applications situées sur les serveurs Web ni du navigateur.

Dans une variante du procédé, il est possible d'attacher plusieurs scénarios à une page de déclenchement donnée. Le choix du scénario se fait alors par la détermination de la valeur d'un ou de plusieurs paramètres de session, ceux-ci ayant été initialisés lors d'une étape précédente de la session. Ces paramètres peuvent également servir de paramètres d'entrée des scénarios et influencer le comportement de ceux-ci. Ces paramètres sont appelés « paramètres de session » car ils sont liés à l'ensemble de la navigation effectuée par un navigateur donné. Comme indiqué précédemment, ces paramètres de session sont gérés préférentiellement à l'aide de témoins.

Ce paramétrage permet avantageusement de personnaliser et d'adapter les scénarios à un utilisateur particulier puisque, en fonction des paramètres de sa session, un scénario particulier est défini et, de plus, ce scénario est paramétré, cette sélection pouvant être différente pour un utilisateur demandant la même page mais avec des paramètres de session différents.

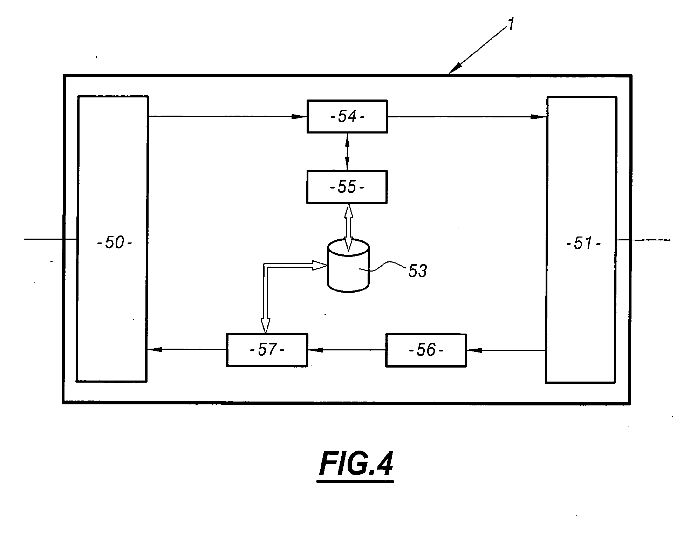

Pour mettre en oeuvre ce procédé, le serveur d'interposition 1, figure 4, comporte donc des moyens de communication 50 avec le navigateur Web 2 et des moyens de communication 51 avec des serveurs Web 3 tels que tous les flux d'informations entre le navigateur 2 et les serveurs Web transitent par le serveur d'interposition 1.

Il comporte également des moyens de stockage 53 de scénarios de navigation automatique. Chaque scénario comporte une adresse de page Web de déclenchement du scénario et des adresses de redirection.

Ce serveur d'interposition a des moyens d'interception 54 des requêtes d'accès du navigateur 2 vers un serveur Web 3 et des moyens de sélection 55 des scénarios de navigation tels que l'interception d'une adresse d'une requête provenant du navigateur correspondant à une adresse de déclenchement sélectionne le scénario correspondant.

Il comporte également des moyens d'interception 56 de la réponse du serveur Web correspondant à la requête d'accès connectés à des moyens 57 de modification de la réponse en une réponse de redirection incluant l'adresse de redirection définie dans les scénarios sélectionnés, connectés à des moyens de transmission de la réponse modifiée au navigateur.

Physiquement, le serveur d'interposition peut être un ordinateur classique possédant deux cartes réseau, l'une pour la connexion au navigateur Web 2 et l'autre pour la connexion aux serveurs Web 3. Il peut également ne comporter qu'une seule carte réseau. Dans ce cas, il utilise ses logiciels standards de gestion de réseau pour décomposer les flux, par exemple en faisant de la translation d'adresses.

Un produit logiciel installé sur cet ordinateur et développé spécialement, permet alors la mise en oeuvre du procédé décrit sur cet ordinateur. Ce produit logiciel est stockable sur un support de mémorisation sous forme d'instructions de programme.

On a ainsi décrit un procédé permettant d'automatiser une navigation parmi plusieurs pages Web. Ainsi, l'utilisateur fait l'expérience d'une navigation aisée et fiable même avec des applications complexes.

## Revendications

1. Procédé de navigation automatique à partir d'un navigateur Web (2) sur une pluralité de pages Web contenues sur des serveurs (3) tel que tous les flux d'informations entre le navigateur (2) et les serveurs (3) des pages Web transitent par un serveur d'interposition (1), **caractérisé en ce qu'**il comporte les étapes de :
a. création (31) d'au moins un scénario de navigation automatique comportant une adresse de page Web de déclenchement du scénario et au moins une adresse de page Web de redirection,
b. stockage (32) du ou des scénarios créés dans le serveur d'interposition,
c. génération (33) par le navigateur Web d'une requête d'accès à la page Web située à l'adresse de déclenchement d'un scénario,
d. interception (34) de la requête d'accès par le serveur d'interposition,
e. sélection (36) du scénario de navigation automatique comportant l'adresse de déclenchement correspondant à l'adresse de la requête, et en parallèle,
f. transmission (37) de la requête d'accès au serveur hébergeant la page Web demandée, puis
g. interception (40) de la réponse du serveur d'hébergement à la requête d'accès par le serveur d'interposition,
h. modification (41) de la réponse en une réponse de redirection incluant l'adresse de redirection définie dans le scénario,
i. transmission (42) de la réponse modifiée au navigateur,
j. génération (44) d'une requête d'accès par le navigateur vers la page Web de redirection.

2. Procédé de navigation automatique selon la revendication 1, **caractérisé en ce que** les étapes d à j sont répétées pour chaque nouvelle adresse de redirection incluse dans le scénario.

3. Procédé de navigation automatique selon la revendication 1 ou 2, **caractérisé en ce que** plusieurs scénarios sont attachés à une adresse de déclenchement, et le choix du scénario dépend de valeurs de paramètres de session.

4. Procédé de navigation automatique selon l'une quelconque des revendications précédentes, **caractérisé en ce que** le scénario comporte des conditions d'arrêt du scénario et/ou des conditions d'extraction de données de la réponse, lesdites conditions étant liées aux réponses

5. Procédé de navigation automatique selon l'une quelconque des revendications précédentes, **caractérisé en ce que** le scénario est apte à recevoir des valeurs de paramètres en entrée, ces valeurs étant utilisées dans l'interprétation du scénario.

6. Serveur d'interposition comportant des premiers moyens de communication (50) avec un navigateur Web et des seconds moyens de communication (51) avec des serveurs de pages Web tel que tous les flux d'informations entre le navigateur et les serveurs de pages Web transitent par le serveur d'interposition, **caractérisé en ce qu'**il comporte :
- des moyens de stockage (53) d'au moins un scénario de navigation automatique comportant une adresse de page Web de déclenchement du scénario et au moins une adresse de redirection,
- des premiers moyens d'interception (54) de toute requête d'accès du navigateur Web vers un serveur de pages Web,
- des moyens de sélection (55) des scénarios de navigation comportant l'adresse de déclenchement correspondant à l'adresse de la requête,
- des seconds moyens d'interception (56) de la réponse du serveur de pages Web à la requête d'accès,
- des moyens de modification (57) de la réponse en une réponse de redirection incluant l'adresse de redirection définie dans le scénario sélectionné, et
- des moyens de transmission (50) de la réponse modifiée au navigateur.

7. Support de mémorisation comportant des instructions de programme adaptées à la mise en oeuvre du procédé de navigation automatique selon l'une quelconque des revendications 1 à 5, lorsque ledit programme est exécuté sur un ordinateur.
